# EUROPEAN PATENT SPECIFICATION

(11) **EP 2 839 085 B1**
(45) Date of publication and mention of the grant of the patent: **21.02.2018**
(21) Application number: 13717259.9
(22) Date of filing: 16.04.2013
(51) Int. Cl.: E04B 2/72, E04H 9/06, E04B 1/76, E04B 1/41, E04B 1/78, F16B 39/12

(54) **INSULATION SYSTEM FOR COVERING A FAÇADE OF A BUILDING**
ISOLIERSYSTEM ZUR ABDECKUNG EINER GEBÄUDEFASSADE
SYSTÈME D'ISOLATION DESTINÉ À RECOUVRIR LA FAÇADE D'UN BÂTIMENT

(30) Priority: 20.04.2012 DK 201200273
(43) Date of publication of application: 25.02.2015
(73) Proprietor: Rockwool International A/S, 2640 Hedehusene (DK)
(72) Inventor: JAKOBSEN, Klavs Koefoed, 4000 Roskilde (DK); PEDERSEN, Soren Rud, 2300 Copenhagen S (DK)
(74) Representative: Rausch Wanischeck-Bergmann Brinkmann
(86) International application number: PCT/EP2013/057883
(87) International publication number: WO 2013/156466

(56) References cited:
- EP-A1- 1 408 168
- EP-A1- 2 180 104
- WO-A1-2011/012096
- DE-A1-102010 048 537
- DE-U1-202009 001 532
- FR-A1- 2 738 879

## Description

The invention relates to an adjustable insulation system for covering a façade of a building consisting of at least one insulation element and at least one mechanical fastener, which fastener fixes the insulation element to the façade of the building, whereby the insulation element has at least a first and a second layer, preferably being connected to each other, the first layer being directed to the façade having a bulk density being lower than the bulk density of the second layer. The first layer therefore serves to provide a compensation layer to cope with irregularities often found while carrying out refurbishment and/or renovation measures. At least one layer is made of mineral fibres, especially stone wool fibres and a binding agent, or of cellular plastic, especially expanded polystyrene (EPS). The fastener has a shaft erecting through the insulation element into the building substrate and a plug or a plug-plate being arranged on or flush with the outer surface of the insulation element. Said insulation systems also being known as External Thermal Insulation Composite Systems (ETICS).

Furthermore the invention relates to a method for installing an insulation system for covering a façade of a building with the steps of fixing at least one insulation element having at least a first and a second layer, preferably being connected to each other, whereby the first layer being directed to the façade has a bulk density being lower than the bulk density of the second layer and whereby at least one layer is made of mineral fibers, especially stone wool fibers and a binding agent, using at least one mechanical fastener to fix the insulation element to the façade of the building, whereby the fastener has a shaft erecting through the insulation element into the building substrate and a plug and/or a plug-plate being arranged on or flush with the outer surface of the insulation element, fixing the fastener by increasing the outer diameter of the shaft protruding into the building substrate and erecting a part of the shaft of the fastener into the first layer of the insulation element in a direction parallel to a surface of the facade.

Such insulation systems in general are well-known in the prior art. In modern roof and façade constructions it is common to employ mineral fiber insulating products comprising an insulation layer and a rigid surface coating or layer on at least the one main surface of the product facing the exterior of the insulated construction. Different insulation materials are known in the prior art as for example fibrous materials made of inorganic and/or organic fibers normally bound with a binding agent.

For example DE 20 2009 001 532 U1 discloses a dual density façade insulation board having a soft inner layer which absorbs unevenness of the substrate and a hard outer layer forming the main layer and having a bulk density between 180 and 280 kg/m3 on which a layer of render can be arranged. The soft inner layer has a bulk density between 30 and 80 kg/m3. Both layers can be made from wood fibers or mineral fibers. Such insulation boards have several disadvantages. If these boards are made of wood fibers they naturally have a very low fire resistance unless high amounts of flame retardants are used. Moreover their thermal properties are quite poor and the durability will be significantly reduced when being exposed to moisture.

The fire resistance of such boards being made from mineral fibers is much better. Nevertheless, a layer of mineral fibers with a bulk density of between 180 and 280 kg/m3 provides only low thermal resistance. To achieve sufficient thermal resistances with these layers it is necessary to use layers of great thickness. To use thick layers has the disadvantage that the weight of such insulation boards is high so that a lot of mechanical fasteners are necessary to fix these insulation boards onto the façade or to use special fasteners which are able to carry a big load and which are therefore expensive and/or made of materials like metal reducing the insulation properties of the insulation system. To use insulation boards with high thicknesses together with a big amount of mechanical fasteners or special fasteners increases the price of such insulation systems namely the costs for the material and for the labour. The prior art uses mechanical fasteners being adjustable in view of the thickness of the insulation element only by reducing the distance between the plug-plate and the building in that the plug-plate is fixed to the shaft in a preferred distance thereby closing a hole in which a screw is arranged.

Furthermore FR 2 738 879 discloses a insulation system using a fastener with a shaft which erects into a middle layer of an insulation element. According to this prior art the part which shall erect into the insulation element is forced to erect by putting a force onto the end of the fastener which protrudes over the surface of the insulation element and the fastener is fixed in the facade by using a nail being inserted and pushed into the fastener in lengthwise direction.

Therefore, it is one object of the present invention to provide an insulation system for covering a façade of a building at low total installed costs, with good thermal insulating characteristics, which can be fixed and adjusted to a building façade very easily without causing high labour costs.

Furthermore it is an object of the invention to provide a method for installing such an insulation system for covering a façade of a building which can easily and cheaply be provided onto a façade without using expensive components and which is particular useful for refurbishment and/or renovation of façades wearing old substrates like e.g. loose mortar.

According to the invention this object is achieved with an insulation system for covering a façade of a building using with the features of claim 1.

The first layer of the insulation element which is preferably made of mineral fibers, especially stone wool fibers, and a binding agent has a low bulk density as from 30 kg/m³ to 70 kg/m³, especially as from 40 kg/m³ to 60 kg/m³. Such a first layer has a high flexibility and is bendable so that such a first layer can compensate or equalize higher protrusions in the surface of the façade, such as e.g. wires being fixed outside of the building as it is known in connection with satellite antennas etc.

Flexibility for the purpose of this invention, can be considered to be compression modulus of elasticity (according to European Standard EN 826), wherein an increasing numerical value for the modulus of elasticity indicates increasing stiffness respectively lower flexibility. For simplification the first layer of the insulation element respectively the element as such may be defined by the compressive stress at 10 % strain to secure that a certain spring-back effect can be utilized during installation.

Furthermore, such a first layer can equalize a rough surface and/or irregularities because of substrates like more or less loose mortar being left on the façade surfaces during refurbishment or renovation measures. To compensate or equalize a rough surface means to level the second and/or each further layer, especially the outer layer of the insulation element. A leveled outer layer of the insulation element provides a planar surface which is prepared to be covered with a rendering system and which reduces the amount of rendering material especially in the areas of adjacent insulation elements.

According to the invention the shaft of the fastener partly erects into the first layer of the insulation element in a direction parallel to a surface of the façade. Therefore the part of the shaft erecting into the first layer of the insulation element in a direction parallel to a surface of the façade additionally stabilizes the first layer of the insulation element and increases the load bearing properties of the insulation element. The part of the shaft erecting into the first layer of the insulation element in the direction parallel to the surface of the façade adds to the effect of a plate or a plug-plate fixing the insulation element to the façade but in the level of the first layer of a multilayered insulation element especially made of mineral fibers. Furthermore, the fastener can be easily used to level or adjust the outer surface of the insulation element.

The insulation system reduces therefore the installation time because no further leveling step, like e.g. grinding, is needed to prepare a planar outer surface as the leveling can easily be done by the first layer of the insulation system in combination with the mechanical fasteners.

The insulation system is in particular useful in relation to refurbishment and/or renovation measures because old substrates like loose mortar or rendering has not to be removed before fixing the insulation element as the fasteners carry and stabilize the first layer of the insulation element by partly erecting into the first layer of the insulation element in a direction parallel to a surface of the façade. In contrast to that prior art glued or partly glued ETICS require to remove loose mortar or rendering and surfaces need to be equalized before insulation elements can be glued to. Thus such prior art systems involve high labour and material cost.

Moreover, small obstacles on the façade can easily be covered due to the high flexibility of the first layer of the insulation element. Therefore no cutting of insulation elements is needed to adapt the insulation elements to the façade.

According to the invention a screw is provided in the shaft of the fastener with which a first part of the shaft erecting into the building substrate is bucked up and with which a second part of the outer surface of the fastener is oriented from parallel to the outer surface of the fastener to mainly perpendicular to the outer surface thereby protruding into the first layer of the insulation element. This screw has therefore the advantage that it can be used to fix the fastener in the façade and in the same time to stabilize the first layer of the insulation element, while leveling the outer surface of the insulation element by setting the length of the shaft of the fastener.

According to a preferred embodiment the second part of the shaft has at least two areas protruding into the insulation element whereby the areas protrude in at least two different directions, preferably perpendicular to each other into the insulation element. This further feature has the effect that the stability of the first layer of the insulation element is increased as the more areas protrude in different directions. It is possible that the protruding areas protrude into only the first layer of the insulation element or into different, e. g. into the first and the second layer of the insulation element.

Preferably the insulation element has a third layer made of mineral fibers and a binding agent, which third layer has a bulk density being higher than the bulk density of the second layer and which third layer forming the outer layer has a high receptiveness and/or adhesion for the rendering system. Such high receptiveness and/or adhesion for the rendering system results in a high bond strength between the base coat of the rendering and the insulation element.

The insulation element being used in an insulation system has therefore three layers whereby the outer layer has in comparison to the two further layers the highest bulk density so that this third layer is very durable. The second layer which has in comparison to the third layer a reduced bulk density has good insulation characteristics and can be made with a bulk density achieving these good insulation characteristics. Finally the first layer being the layer which is in contact with the building has a low bulk density so that this layer can absorb unevenness of the surface of the building substrate. Therefore, the first layer being made highly flexible is able to handle unevenness in the building surface of up to 15 to 20 mm, depending on the thickness of this layer.

According to a further feature the bond strength between the third layer and the rendering layer amounts to between 0,010 N/mm² and 0,080 N/mm², especially between 0,010 N/mm² and 0,030 N/mm², preferably between 0,015 N/mm² and 0,025 N/mm², for example 0,020 N/mm². The insulation system having the before mentioned bond strength has moreover a high stability without using a big number of mechanical fasteners even if the insulation elements are only fixed by these mechanical fasteners without gluing the insulation onto the façade. This is achieved by using fasteners and a three-layered insulation element having special synchronized densities of the different layers which will be very advantageous while fixing it to the façade. Said adjusted densities on the one hand provide the needed rigidity and strength, e.g. pull-through strength for the mechanical fasteners in the third layer and on the other hand secure the good insulation characteristics of the second layer. Finally, the first layer which can be very slim in thickness compared to the other two layers and which of course has good insulation characteristics because of its low bulk density is able to equalize projections in the surface of the building façade. By choosing the synchronized densities in accordance with the present invention the insulation element even provides a controllable flexibility, i.e. a kind of spring-back effect which is very useful while leveling the surface of the ready installed insulation layer before applying the rendering system. Therefore costly grinding of the insulation boards is completely avoided.

The bond strength between the layer of render, especially a base coat which is part of the layer of render respectively the rendering system, and the insulation element is measured in accordance with the Guideline for European Technical Approval ETAG No. 004 (e.g. edition 03/2000), paragraph 5.1.4.1.1. The results are expressed in N/mm² (MPa).

Where appropriate, in order to increase the receptiveness and/or adhesion of the third or outer layer for the rendering system, the insulation element on its outer surface may comprise a primer, coating and/or an additive.

Preferably the third layer has a bulk density of 180 kg/m³ to 350 kg/m³, especially of 220 kg/m³ to 260 kg/m³. Furthermore at least the third layer is made of mineral fibers in an amount of 90 to 99 wt % of the total weight of starting materials in the form of a collected web and a binding agent in an amount of 1 to 10 wt % of the total weight of starting materials, whereby the collected web of mineral fibers is subjected to a disentanglement process, whereby the mineral fibers are suspended in a primary air flow, whereby the mineral fibers are mixed with the binding agent before, during or after the disentanglement process to form a mixture of mineral fibers and binding agent and whereby the mixture of mineral fibers and binding agent is pressed and cured to provide a consolidated composite with a bulk density of 180 kg/m³ to 350 kg/m³, especially of 220 kg/m³ to 260 kg/m³.

The percentages mentioned are based on dry weight of starting materials. As a result of the before mentioned production process a surprisingly homogenous layer of mineral fibers and a binding agent is achieved. Therefore the quality of the curing is significantly improved and uncured binder spots causing well known discoloration or so called brown spots on the rendering system are eliminated.

Such layers can be produced in a versatile and cost efficient method. By adjusting the density to which the layer is pressed, a variety of different layers can be tailor-made for specific purposes. Therefore, these layers have a variety of uses, predominantly as building elements. In particular the layers can be in the form of panels. In general, the layers are used in applications where mechanical stability and uneven surface finish as well as insulating properties are important. In some applications the layers can be used as acoustically absorbing ceiling or wall panels. In other applications, the layers can be used as insulating outer cladding for buildings. The precise quantity of mineral fibers is chosen so as to maintain appropriate fire resistance properties and appropriate thermal and/or acoustic insulation value and limiting cost, whilst maintaining an appropriate level of cohesion, depending on the appropriate application. A high quantity of fibers increases the fire resistance of the element, increases its acoustic and thermal insulation properties and limits cost, but decreases the cohesion in the element. This means that the lower limit of 90 wt % results in an element having good cohesion and strength, and only adequate insulation properties and fire resistance, which may be advantageous for some composites, where insulation properties and fire resistance are less important. If insulation properties and fire resistance are particularly important the amount of fibers can be increased to the upper limit of 99 wt %, but this will result in only adequate cohesion properties. For a majority of applications a suitable composition will include a fiber amount of from 90 to 97 wt % or from 91 to 95 wt %. Most usually, a suitable quantity of fibers will be from 92 to 94 wt %.

The amount of binder is also chosen on the basis of desired cohesion, strength and cost, plus properties such as reaction to fire and thermal insulation value. The low limit of 1 wt % results in a layer with a lower strength and cohesion, which is however adequate for some applications and has the benefit of relatively low cost and potential for good thermal and acoustic insulation properties. In applications where a high mechanical strength is needed, a higher amount of binder should be used, such as up to the upper limit of 10 wt %, but this will increase the cost for the resulting product and further the reaction to fire will often be less favorable, depending on the choice of binder. For a majority of applications, a suitable layer will include a binder amount from 3 to 10 wt % or from 5 to 9 wt %, most usually a suitable quantity of binder will be from 6 to 8 wt %.

The mineral fibers used for such a layer could be any mineral fibers, including glass fibers, ceramic fibers or stone fibers but preferably stone fibers are used. Stone wool fibers generally have a content of iron oxide of at least 3 % and alkaline earth metals (calcium oxide and magnesium oxide) from 10 to 40 %, along with the other usual oxide constituents of mineral wool. These are silica; alumina; alkali-metals (sodium oxide and potassium oxide) which are usually present in low amounts; and can also include titanium and other minor oxides. Fiber diameter is often in the range 3 to 20 microns, in particular 5 to 10 microns, as conventional.

An alternative third layer used in an insulation system is made of mineral fibers in an amount of from 24 to 80 wt % of the total weight of starting materials in the form of a collected web, an aerogel particulate material in an amount of from 10 to 75 wt % of the total weight of the starting materials and a binding agent in an amount of from 1 to 30 wt % to the total weight of starting materials, whereby the mineral fibers are suspended in the primary air flow, whereby the aerogel particulate material is suspended in the primary air flow, whereby mixing the aerogel particulate with the suspended mineral fibers, whereby the mineral fibers are mixed with the binding agent before, during or after the mixing of the aerogel particulate material with the mineral fibers to form a mixture of mineral fibers, aerogel particulate material and binding agent and whereby the mixture of mineral fibers, aerogel particulate material and binding agent is pressed and cured to provide a consolidated composite with a bulk density of 180 kg/m³ to 350 kg/m³, especially of 220 kg/m³ to 260 kg/m³.

Preferably, the binding agent of the third layer is a dry binder, especially a powdery binder, e.g. phenol formaldehyde binder, phenol urea formaldehyde binder, melamine formaldehyde binder, condensation resins, acrylates and/or other latex compositions, epoxy polymers, sodium silicate, hotmelts of polyurethane, polyethylene, polypropylene and/or polytetrafluorethylene polymers. The use of a dry binder, preferably a phenol formaldehyde binder, as this type of binder is easily available and has proved efficient, has the advantage that mixing is easy and furthermore the need for maintenance of the equipment is low. Finally such binder is relatively stable and storable.

The percentages mentioned are based on dry weight of starting materials.

Such a layer can be manufactured in a very versatile and cost efficient way. A wide range of properties in terms of e.g. mechanical strength, thermal insulation capability etc. can be produced by altering the quantity of each component. This means that a variety of different layers can be made that are tailor-made for specific purposes.

Mixing the fibers and the aerogel particulate material as a suspension in an air flow provides a surprisingly homogeneous composite, especially considering the considerable differences in the aerodynamic properties of these materials. This high level of homogeneity in the layer results generally in an increased level of mechanical strength relative to the layers of the prior art for a given combination of quantities of the layers. The increased homogeneity of the layer also has other advantages such as aesthetic appeal and consistency of properties throughout a single layer. As a result of mixing the aerogel particulate material with the mineral fibers when suspended in an air flow the aerogel particulate material is allowed to penetrate into the tufts of fibers that are present. In contrast, when the mixing process involves physical contact of, for example a stirrer with the fibers, the fibers tend to form compact balls, which the aerogel particulate material cannot penetrate easily. The result of this can be that, in cases where the mixing process involves physical contact, the final product contains areas where the aerogel and the fibers are visibly separated in distinct zones.

The layers have a variety of uses as it is described above standing.

Aerogel when used in the broader sense means a gel with air as the dispersion medium. Within that broad description, however three types of aerogel exist which are classified according to the conditions under which they have been dried. These materials are known to have excellent insulating properties owing to their very high surface areas, and high porosity. They are manufactured by gelling a flowable sole gel-solution and then removing the liquid from the gel in a manner that does not destroy the pores of the gel.

Preferably the second layer of the insulation element has a bulk density as from 40 kg/m³ to 120 kg/m³, especially of 80 kg/m³. Such second layer being preferably made of mineral fibers, especially stone wool fibers has excellent insulation characteristics. Therefore, to achieve good insulation characteristics of the building the thickness of such layer can nowadays be in a range of up to 100 mm. However, even fulfilling future requirements with higher thicknesses the total weight of an insulation element using such a second layer is so low that the insulation element can be fixed without gluing but only with mechanical fasteners.

The fastener has a screw-like shaft and a plug and/or a plug-plate which plug and/or plug-plate is preferably arranged in the outer layer of the insulation element in that the plug and/or plug-plate is flush with the outer surface of the outer layer of the insulation element. For this purpose the outer layer of the insulation needs the before mentioned bulk density so that the plug and/or plug-plate can be arranged flush with the outer surface of the outer layer. This arrangement has the big advantage that the rendering system can be provided with a low thickness because the plug and/or plug-plate has not to be embedded into the layer of render, i.e. the base coat and no pre-priming of the plug-plate is required.

Preferably the insulation element is fixed to the façade by a low number of mechanical fasteners, e. g. by one fastener per square meter of the insulation element. To reduce the specific number of the mechanical fasteners has the advantage that the cost for the material and the cost for the labour used to build up such an insulation system are decreased.

The rendering system is normally a multi-layer coat system containing at least a base coat and a finishing coat. Moreover a reinforcement mesh may be embedded in the base coat.

The before described insulation system provides in comparison to the prior art a faster installation time, an improved reliability by reduction of defects and errors, good insulation characteristics and thus an enhanced comfort and improved indoor climate. Moreover a lower system price and a shorter site time are achieved.

According to the invention this object is achieved with a method according to the independent method claim 11 with the step of erecting a part of the shaft of the fastener into the first layer of the insulation element in a direction parallel to a surface of the façade.

The advantages of this method are described before with respect to the insulation system according to the invention. The method according to the invention can preferably be used for refurbishment and/or renovation of existing buildings having no heat and/or sound insulation or a heat and/or sound insulation which is not up to date and needs to be improved.

According to the method the insulation element is fixed to the façade by a fastener having a shaft with a first part erecting into a bore hole in the building substrate and which is bucked up by a screw provided in the shaft so that the shaft is interlocked in the bore hole. After interlocking the shaft in the bore hole a second part of the outer surface of the fastener is oriented from an orientation parallel to the outer surface of the fastener to an orientation mainly perpendicular to the outer surface of the fastener by turning the screw in the shaft of the fastener so that the original length of the fastener is reduced. Reducing the length of the fastener has the result that the second part of the fastener protrudes into the first layer of the insulation element. Before the length of the fastener is reduced but after the fastener is interlocked in the bore hole the plug or the plug-plate is arranged on top of or with a small distance to the outer surface of the insulation element. Reducing now the length of the shaft of the fastener results in an embedding of the plug or plug-plate in the outer layer of the insulation element so that the outer surface of the plug or the plug-plate is arranged flush with the outer surface of the outer layer of the insulation element.

To simplify the arrangement of the plug or plug-plate flush with outer surface of the outer layer of the insulation element the plug or the plug-plate has knife like means to cut material of the outer surface of the outer layer of the insulation element, which are arranged on a surface of the plug or the plug-plate oriented to the outer surface of the outer layer of the insulation element. Furthermore, this surface of the plug or the plug-plate is provided with several recesses to collect material being cut from the surface of the outer layer of the insulation element while moving the plug or plug-plate into the outer layer of the insulation element. To remove material from the outer surface of the outer layer of the insulation element has the advantage that outer layers with higher bulk densities van be used. Such layers simplify the establishment of an insulation system according to the invention having a planar outer surface on which a thin rendering system can fixed easily thereby reducing the required rendering material and the weight of the rendering system as well as the whole insulation system, which weight has to be carried more or less by the fasteners.

According to a further feature of the method at least two areas of the second part of the shaft are protruding into the insulation element in at least two different directions, preferably perpendicular to each other. The fixing and stabilizing properties of the insulation system are enhanced by this feature.

In accordance with the insulation system and/or the method according to the invention fasteners are used having a shaft with a length being longer than the thickness of the insulation element and a plug or a plug-plate being arranged at one end of the shaft. The fastener is divided into at least a first part and a second part, which second part having a certain diameter is provided with means which erect outwardly of the diameter by decreasing the length of the shaft via an internal pulling element. Such means are formed by e.g. providing the second part of the shaft with a slit and additionally an area of increased width, preferably in circular shape. Said slit having a length of about 20 to 35 mm ensuring that the means when erected outwardly provide a kind of spring which supported by the flexibility of the insulation element creates a preload on the mechanical fastener, i.e. the plug-plate, thereby providing a control mechanism for the mounting and setting of the fastener. The preload on the fastener may be in a range of between 100 to 600 N per fastener.

According to a further feature of the fastener these means erecting outwardly are parts of the shaft which is interrupted by two slits being arranged on radially opposite sides of the shaft, whereby each slit has an area of increased width, preferably in circular shape.

Finally the second part of the shaft has at least two areas erecting outwardly of the diameter in at least two different directions, preferably perpendicular to each other by decreasing the length of the shaft via the internal pulling element. The internal pulling element is preferably a screw being arranged in the shaft and being connected to the first part of the shaft which is used to fix the shaft in a hole of a building façade.

The invention will be described in the following by way of example and with reference to the drawings in which
- Fig. 1: is a schematic drawing of an insulation element being part of an insulation system for covering a façade of a building;
- Fig. 2: is an enlarged drawing of a part of the insulation system according to circle I in Fig. 1;
- Fig. 3: is an enlarged drawing of a part of the insulation system according to circle II in Fig. 1;
- Fig. 4: is an enlarged drawing of a part of the insulation system according to circle III in Fig. 1;
- Fig. 5: is an enlarged drawing of a part of the insulation system according to circle IV in Fig. 1;
- Fig 6: is a side view of a fastener partly as sectional view;
- Fig.7: is a schematic drawing of an insulation element fixed to a façade of a building with a fastener in a first position;
- Fig 8: is a schematic drawing of the insulation element fixed to the façade of the building with the fastener in a second position and
- Fig 9: is a schematic drawing of the insulation element fixed to the façade of the building with the fastener in a third position.

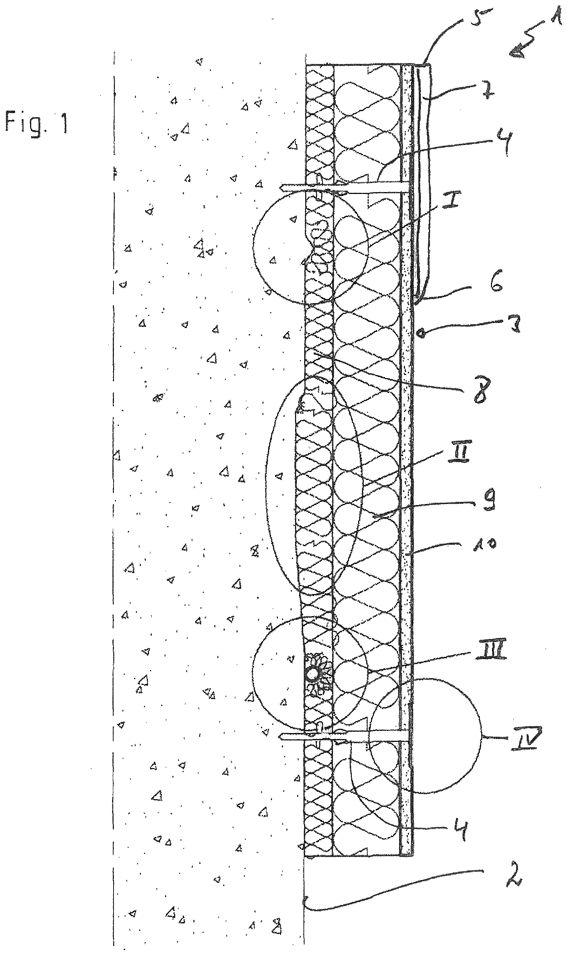

Fig. 1 shows a part of an insulation system 1 for covering a façade 2 of a building. The insulation system consists of several insulation elements 3 of which only one insulation element 3 is shown in Fig. 1. The insulation element 3 is fixed with only mechanical fasteners 4 to the façade 2. These mechanical fasteners 4 will be described later.

Furthermore the insulation system consists of a rendering system 5 being shown only partly in Fig. 1 and consisting of a base coat 6 and a finishing coat 7. The rendering system 5 is based on mortar and can be modified with an adhesive resin.

The insulation element 3 consists of a first layer 8, a second layer 9 being arranged on the first layer 8 and a third layer 10 being arranged on the second layer 9. Said at least second and third layer 9, 10 may be produced as an integral element, so called dual-density product, in a traditional manner whereafter the first layer 8 is glued to said element. However, various alternatives are conceivable and within the scope of the invention.

The third layer 10 is made of mineral fibers and a binding agent and has a bulk density being higher than the bulk density of the second layer 9 which is made of mineral fibers and a binding agent. The bulk density of the third layer 10 is 240 kg/m³. This third layer 10 has a thickness of approximately 30 mm. The third layer 10 is fixed to the second layer 9 for example by gluing.

The second layer 9 which is made of stone wool fibers and a binding agent has a bulk density of approximately 80 kg/m³ so that this second layer 9 has good insulation characteristics, especially a good total thermal resistance.

The mineral fibers of the second layer 9 can be arranged parallel to the surfaces of the insulation element 3 which are substantially oriented parallel to the façade 2. For certain uses it may be of advantage to arrange the mineral fibers of the second layer 9 perpendicular to these surfaces. The advantage of the arrangement of the mineral fibers perpendicular to these surfaces is that the insulation element 3 has increased compression strength in comparison to an insulation element 3 having a second layer 9 with an orientation of the mineral fibers parallel to these surfaces.

Nevertheless a second layer 9 of an insulation element 3 with a fiber orientation substantially parallel to these surfaces has improved thermal insulation characteristics in comparison to an insulation element 3 with a second layer 9 having a fiber orientation perpendicular to the surfaces.

The first layer 8 which is made of mineral fibers and a binding agent and which is fixed to the second layer 9 and which is in contact with the façade 2 has a bulk density of approximately 50 kg/m³ so that this first layer 8 has a high flexibility and is highly compressible. The thickness of said layer preferably amounts to about 30 to 40 mm so that irregularities of the building façade, like e.g. offsets, protrusions, cables etc., can be equalized. The fibre orientation is chosen as to secure that a compression stress at 10 % strain (EN 826) of the insulation element 3 of at least 5 kPa is achieved. Because of the characteristics of the third layer 10, especially the high bulk density the bond strength between the third layer 10 and the rendering system 5 is 0,020 N/mm². To achieve this bond strength the third layer 10 is made according to a further alternative of mineral fibers in an amount of around 96 wt % of the total weight of starting material in the form of a collected web and a binding agent in an amount of 4 wt % of the total weight of starting materials, whereby the collected web of mineral fibers is subjected to a disentanglement process, whereby the mineral fibers are suspended in a primary air flow, whereby the mineral fibers are mixed with a binding agent before the disentanglement process to form a mixture of mineral fibers and binding agent and whereby the mixture of mineral fibers and binding agent is pressed and cured to provide a consolidated composite with a bulk density of 240 kg/m³.

According to yet another alternative the third layer 10 is made of mineral fibers in an amount of about 70 wt % of the total weight of starting materials in the form of a collected web, an aerogel particulate material in an amount of 25 wt % of the total weight of starting materials and a binding agent in an amount of 5 wt % of the total weight of starting materials, whereby the mineral fibers are suspended in a primary air flow, whereby the aerogel particulate material is suspended in the primary air flow, thereby mixing the aerogel particulate material with the suspended mineral fibers, whereby the mineral fibers are mixed with the binding agent before mixing of the aerogel particulate material with the mineral fibers to form a mixture of mineral fibers, aerogel particulate material and binding agent and whereby the mixture of mineral fibers, areogel particulate material and binding agent is pressed and cured to provide a consolidated composite with a bulk density of 240 kg/m³.

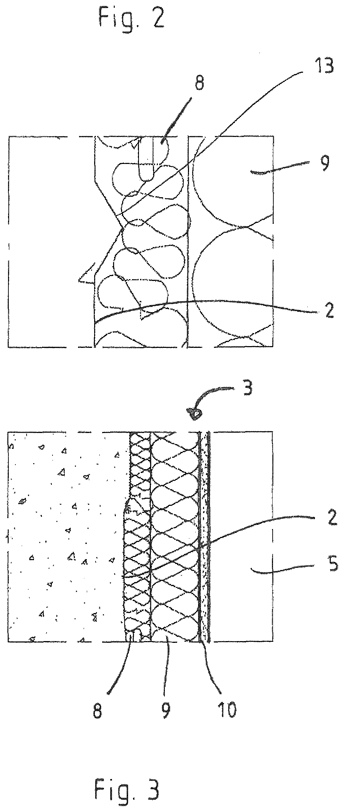

Because of the low bulk density the first layer 8 of the insulation element 3 has characteristics which allow to equalize and compensate for unevenness of the façade 2 as can be seen in Fig. 2 to 4 by examples. Fig. 2 shows a protrusion 13 of the façade, like e.g. a concrete ridge, which is equalized by the first layer 8 in that the first layer 8 is compressed in the area of the protrusion 13.

Fig. 3 shows an offset 14 of the façade 2 which is equalized by the first layer 8 of the insulation element 3 in that the first layer 8 is compressed in the area of the part of the offset 14 erecting to the insulation element 3.

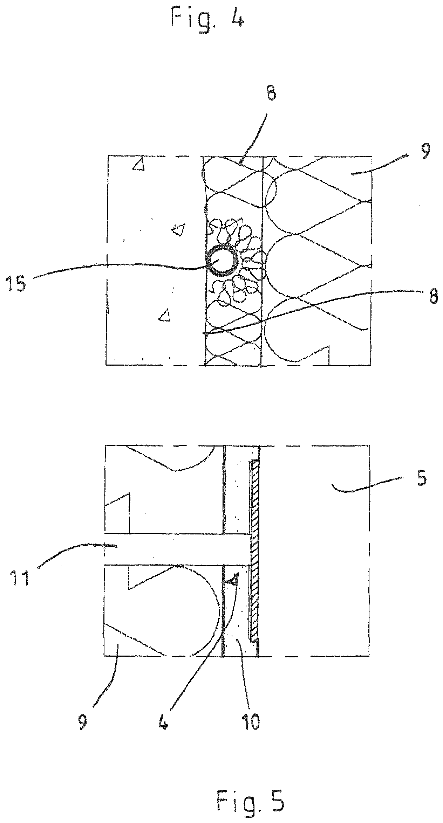

Fig. 4 shows a cable 15 fixed on the façade 2 and being covered by the insulation element 3. As can be seen from Fig. 4 the first layer 8 of the insulation element 3 is compressed in the area of the cable 15.

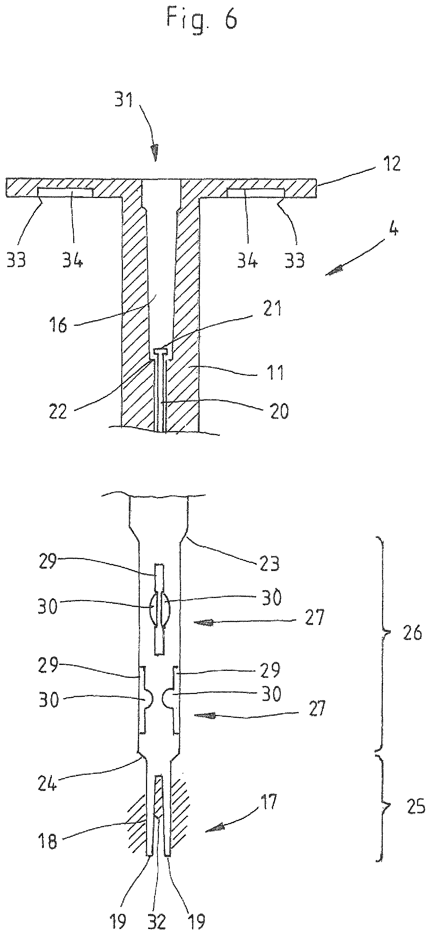

The mechanical fastener 4 shown especially in Figs. 6 to 9 has a screw-like shaft 11 and a plug-plate 12 being arranged at one end of the shaft 11. The plug-plate 12 is arranged in the third layer 10 of the insulation element 3 in that the plug-plate 12 is flush with the outer surface of the third layer 10 of the insulation element 3. Fig. 5 shows the mechanical fastener 4 with the shaft 11 and the plug-plate 12 being arranged flush with the outer surface of the third layer 10.

The screw-like shaft 11 of the fastener 4 has a bore 16 running in axial direction through the shaft 11 and being open at both ends of the shaft 11. The bore 16 has different diameters whereby the diameters decrease from the end of the shaft 11 being connected to the plug-plate 12 to the opposite end 17 where an external screw thread 18 is arranged at the outer surface of the shaft 11. The end 17 is split in two fingerlike parts 19 which can be bulked or spread up via a screw 20 being inserted into the bore 16 and having a screw head 21 with a diameter bigger than the diameter of the bore 16 below the screw head 21 so that the bore 16 has a shoulder 22 on which the screw head 21 rests.

Furthermore the shaft 11 has two outer shoulders 23, 24, which are used for a contact at the shaft 11 on the façade 2 and on the outer surface of the first layer 8, so that a movement of the shaft 11 in axial direction is limited by the shoulders 23, 24.

The shaft 11 has a length being longer than the thickness of the insulation element 3. The shaft 11 is divided into a first part 25 and a second part 26 which second part 26 has a diameter being provided with means 27 which erect outwardly of the diameter by decreasing the length of the shaft 11 via the screw 20 which is an internal pulling element.

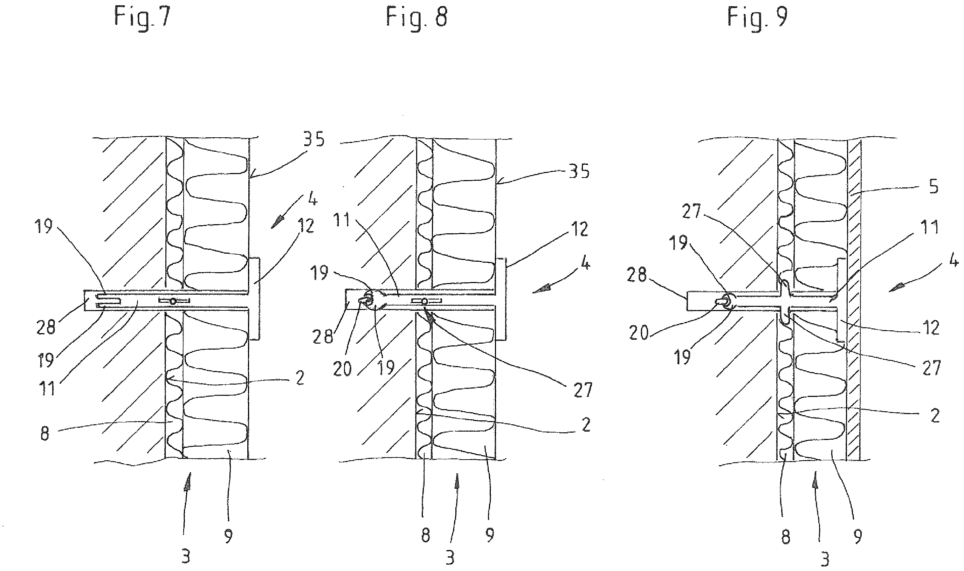

The first part 25 of the shaft 11 is used to fix the shaft 11 in a hole 28 (figures 7 to 9) in the façade 2. The means 27 erecting outwardly are parts of the shaft 11 in the area of the second part 26. These means 27 are arranged between two slits 29 interrupting the shaft 11 and being arranged on radially opposite sides of the shaft 11. Each slit 29 has an area 30 of increased diameter with a circular shape. From figure 6 it can be seen that the second part 26 of the shaft 11 has two areas being erectable outwardly in at least two different directions of the shaft 11, namely perpendicular to each other, by decreasing the length of the shaft 11 via the screw 20.

The shaft 11 is connected to the plug-plate 12 which is arranged at one end of the shaft 11. The plug-plate 12 has an opening 31 which allows the insertion of a tool to turn the screw 20 having an external screw thread 32 being arranged at the end opposite of the screw head 21 and between the fingerlike parts 19.

The plug-plate 12 has knifelike means 33 which are arranged on the outer surface of the plug-plate 12 being oriented to the shaft 11 and which are combined with recesses 34 in which material being cut from the surface of the outer layer 10 by the knifelike means is collected.

Figures 7 to 9 show the fastener 4 in different positions during mounting and fixing of an insulation element 3 on a façade 2. Just for reasons of simplification the insulation element 3 is shown with only two layers 8 and 9 and the rendering system 5 in figure 9.

Figure 7 shows a first position in which the insulation element 3 is arranged on top of façade 2. After a hole has been drilled through the insulation element 3 into the building substrate the fastener 4 is inserted with his end opposite of the plug-plate 12 into the hole 28. The plug-plate 12 is lying on top of the surface 35 of the second layer 9. In this position the screw 20 is screwed so that the external screw thread 32 pulls the fingerlike parts 19 of the shaft 11 towards the plug-plate 12 thereby spreading the fingerlike parts 19 in a way that the shaft 11 is clamped within the hole 28 to withstand drag forces in the direction of the longitudinal axis of the shaft 11. This position with the spread up fingerlike parts 19 is shown in figure 8. By spreading up the fingerlike parts 19 the overall length of the shaft 11 is slightly shortened.

Starting in figure 8 the screw 20 is turned furthermore so that the means 27 in the second part 26 of the shaft 11 are directed into the first layer 8 so that these means 27 form clamp like fingers fixing the first layer 8 to the façade 2. By this the length of the shaft 11 will be further shortened and spring-back forces resulting from the highly flexible first layer 8 will be utilized. To utilize said forces and control the mounting and setting of the fastener in a practical manner the length of the shaft 11 in a first step often will be reduced by around 5 to max. 15 mm depending on the conditions on site. Said reduction of the insulation thickness is therefore to be considered while planning and designing the insulation system 1 according to the invention. During this step of the method the plug-plate 12 can be turned without the shaft 11 to cut with the knifelike means 33 into the outer surface 35 of the second layer 9 so that the plug-plate 12 finally is embedded into the second layer 9 with the plug-plate 12 being arranged flush with the outer surface 35 of the second layer 9. After that the rendering system 5 can be applied to the outer surface 35 of the second layer 9.

In an embodiment with a fastener which plug-plate 12 and shaft is one piece the before described method is different in that in first step after the fastener is inserted with the shaft into the hole 28 is turned so that the knifelike means 33 of the plug-plate 12 remove material from the surface 35 of the outer layer 9 until the plug-plate 12 is arranged flush with the outer surface 35 of the layer 9. After that the screw 20 is screwed until the fingerlike parts 19 are spread up and the shaft 11 is fixed in the hole 28. Turning the screw has than the effect that the means 27 in the second part 26 of the shaft 11 are moved from an orientation parallel to the outer surface of the fastener 4 to an orientation mainly perpendicular to the outer surface thereby protruding into the first layer 8 of the insulation element 3. This embodiment has the advantage that the mounting and setting of the fastener 4 is better controllable as a certain preload on the fastener is immediately tangible for the professional installer.

Due to its adjusting properties resulting from the spring-back effect of the combined effect of the first layer 8 and the second part 26 of the fastener 4 the insulation system 1 according to the invention is particularly useful for refurbishment and/or renovation of façades wearing old substrates like e.g. loose mortar. Moreover, such system 1 can easily and cheaply be provided onto a façade without using expensive components.

### Reference list

- 1: insulation system
- 2: façade
- 3: insulation element
- 4: mechanical fastener
- 5: rendering system
- 6: base coat
- 7: finishing coat
- 8: first layer
- 9: second layer
- 10: third layer
- 11: shaft
- 12: plug-plate
- 13: protrusion
- 14: offset
- 15: cable
- 16: bore
- 17: end
- 18: external screw thread
- 19: fingerlike parts
- 20: screw
- 21: screw head
- 22: shoulder
- 23: outer shoulder
- 24: outer shoulder
- 25: first part
- 26: second part
- 27: means
- 28: hole
- 29: slit
- 30: area
- 31: opening
- 32: external screw thread
- 33: knifelike means
- 34: recess
- 35: surface

## Claims

1. Insulation system for covering a façade (2) of a building consisting of at least one insulation element (3) and at least one mechanical fastener (4), which fastener, in use, (4) fixes the insulation element (3) to the façade (2) of the building, whereby
- said insulation element (3) has at least a first layer (8) and a second layer (9), preferably being connected to each other;
- said first layer (8), in use, being directed to the façade (2) having a bulk density being lower than the bulk density of the second layer (9);
- at least one layer (8, 9) is made of mineral fibers, especially stone wool fibers and a binding agent, or of cellular plastic, especially expanded polystyrene (EPS),
- said fastener (4) has a shaft (11) erecting through the insulation element (3) into the building and a plug or a plug-plate (12) being arranged on or flush with the outer surface of the insulation element (3),
**characterized in that**
said shaft (11) of the fastener (4) partly erects into the first layer (8) of the insulation element (3) in a direction parallel to a surface of the façade (2), whereby the first layer (8) is made of mineral fibers and a binding agent, whereby the first layer (8), when in use, is in contact with the façade (2) and whereby a screw (20) is provided in the shaft (11) of the fastener (4) with which a first part of the shaft (11) erecting into the building is bucked up and with which a second part of the outer surface of the fastener (4) is oriented from parallel to the outer surface of the fastener (4) to mainly perpendicular to the outer surface thereby protruding into the first layer (8) of the insulation element (3).

2. Insulation system according to claim 1,
**characterized in that** the second part of the shaft (11) has at least two areas (30) protruding into the insulation element (3) whereby the areas (30) protrude in at least two different directions, preferably perpendicular to each other into the insulation element (3).

3. Insulation system according to any preceding claim,
**characterized in that** a third layer (10) is being arranged on the second layer (9) and which third layer (10) has a bulk density of 180 kg/m³ to 350 kg/m³, preferably of 220 kg/m³ to 260 kg/m², especially of 240 kg/m³.

4. Insulation system according to any preceding claim, **characterized in that** the element (3) as such is defined by a compressive stress at 10 % strain to secure that a certain spring-back effect can be utilized during installation.

5. Insulation system according to any preceding claim, **characterized in that** the first layer (8) has a compressive strength of 5 kPa to 15 kPa, preferably of 5 kPa to 10 kPa and/or **in that** a preload on the fastener (4) is in a range of between 100 N to 600 N per fastener.

6. Insulation system according to any preceding claim wherein the first layer (8) of the insulation element (3) has a bulk density of from 30 kg/m³ to 70 kg/m³, preferably 40 kg/m³ to 60 kg/m³, especially of 50 kg/m³.

7. Insulation system according to any preceding claim wherein the second layer (9) of the insulation element (3) has a bulk density as from 40 kg/m³ to 120 kg/m³, preferably 60 kg/m³ to 90 kg/m³, especially of 80 kg/m³.

8. Insulation system according to any preceding claim, whereby the second layer (9) has fibers being substantially oriented parallel to the surfaces of the second layer (9).

9. Insulation system according to any preceding claim, whereby the second part of the shaft (11) for each area (30) protruding into the insulation element (3) has a length of approximately 5 to 40 mm, preferably 25 to 30 mm.

10. Method for installing an insulation system (1) for covering a façade (2) of a building according to one of the claims 1 to 9 with the following steps:
- fixing at least one insulation element (3) having at least a first layer (8) and a second layer (9), preferably being connected to each other, whereby the first layer (8) being directed to the façade (2) has a bulk density being lower than the bulk density of the second layer (9) and whereby at least the first layer (8) is made of mineral fibers, especially stone wool fibers and a binding agent,
- using at least one mechanical fastener (4) to fix the insulation element (3) to the façade (2) of the building, whereby the fastener (4) has a shaft (11) erecting through the insulation element (3) into the building substrate and a plug and/or a plug-plate (12) being arranged on or flush with the outer surface of the insulation element (3),
- fixing the fastener (4) in the building by increasing the outer diameter of the shaft (11) protruding into the building substrate,
- erecting a part of the shaft (11) of the fastener (4) into the first layer (8) of the insulation element (3) in a direction parallel to a surface of the façade (2) whereby the fastener (4) with a first part of the shaft (11) erecting into the building substrate is bucked up by a screw (20) provided in the shaft (11) with which a second part of the outer surface of the fastener (4) is moved from an orientation parallel to the outer surface of the fastener (4) to an orientation mainly perpendicular to the outer surface thereby protruding into the first layer (8) of the insulation element (3).

11. Method according to claim 10, whereby at least two areas (30) of the second part of the shaft (11) are protruding into the insulation element (3) in at least two different directions, preferably perpendicular to each other.

## Patentansprüche

1. Isoliersystem zur Abdeckung einer Fassade (2) eines Gebäudes, wobei das Isoliersystem aus zumindest einem Isolierelement (3) und zumindest einem mechanischen Befestigungsmittel (4) besteht, wobei das Befestigungsmittel im Gebrauch das Isolierelement (3) an der Fassade (2) des Gebäudes befestigt, wobei
- das Isolierelement (3) zumindest eine erste Schicht (8) und eine zweite Schicht (9) aufweist, die vorzugsweise miteinander verbunden sind;
- die erste Schicht (8) in Gebrauch zu der Fassade (2) hin gewandt ist und eine Rohdichte aufweist, die niedriger als die Rohdichte der zweiten Schicht (9) ist;
- zumindest eine Schicht (8, 9) aus Mineralfasern, insbesondere Steinwollfasern, und einem Bindemittel oder aus Zellkunststoff, insbesondere Styropor (EPS) besteht,
- das Befestigungsmittel (4) einen Schaft (11), der sich aufrecht durch das Isolierelement (3) in das Gebäude erstreckt, und einen Stopfen oder eine Stopfen-Platte (12) aufweist, die auf oder bündig mit der Außenfläche des Isolierelementes (3) angeordnet ist,
**dadurch gekennzeichnet, dass**
der Schaft (11) des Befestigungsmittels (4) sich teilweise in die erste Schicht (8) des Isolierelementes (3) in einer parallelen Richtung zu einer Oberfläche der Fassade (2) erstreckt, wobei die erste Schicht (8) aus Mineralfasern und einem Bindemittel besteht, wobei die erste Schicht (8) in Gebrauch in Kontakt mit der Fassade (2) ist und wobei eine Schraube (20) in dem Schaft (11) des Befestigungsmittels (4) vorgesehen ist, mit welcher ein erster Teil des Schaftes (11), der sich in das Gebäude erstreckt, festgezogen ist und mit weicher ein zweiter Teil der Außenfläche des Befestigungsmittels (4) von einer parallelen Ausrichtung zu der Außenfläche des Befestigungsmittels (4) zu einer überwiegend senkrechten Ausrichtung zu der Außenfläche hin gerichtet wird und dadurch in die erste Schicht (8) des Isolierelementes (3) hineinragt.

2. Isoliersystem gemäß Anspruch 1,
**dadurch gekennzeichnet, dass** der zweite Teil des Schaftes (11) zumindest zwei Bereiche (30) aufweist, die in das Isolierelement (3) hineinragen, wobei die Bereiche (30) in zumindest zwei unterschiedliche Richtungen, vorzugsweise senkrecht zueinander, in das Isolierelement (3) hineinragen.

3. Isoliersystem gemäß irgendeinem der vorherigen Ansprüche,
**dadurch gekennzeichnet, dass** eine dritte Schicht (10) auf der zweiten Schicht (9) angeordnet ist, wobei die dritte Schicht (10) eine Rohdichte von 180 kg/m³ bis 350 kg/m³, vorzugsweise von 220 kg/m³ bis 260 kg/m³, insbesondere von 240 kg/m³ aufweist.

4. Isoliersystem gemäß irgendeinem der vorherigen Ansprüche, **dadurch gekennzeichnet, dass** das Element (3) als solches durch eine Druckspannung von 10% Belastung definiert ist, um sicherzustellen, dass eine bestimmte Rückspringwirkung während der Installation genutzt werden kann.

5. Isoliersystem gemäß irgendeinem der vorherigen Ansprüche, **dadurch gekennzeichnet, dass** die erste Schicht (8) eine Druckspannung von 5 kPa bis 15 kPa, vorzugsweise von 5 kPa bis 10 kPa aufweist, und/oder dass eine Vorspannung auf dem Befestigungsmittel (4) in einem Bereich von 100 N bis 600 N pro Befestigungsmittel liegt.

6. Isoliersystem gemäß irgendeinem der vorherigen Ansprüche, wobei die erste Schicht (8) des Isolierelementes (3) eine Rohdichte von 30 kg/m³ bis 70 kg/m³, vorzugsweise von 40 kg/m³ bis 60 kg/m³, insbesondere von 50 kg/m³ aufweist.

7. Isoliersystem gemäß irgendeinem der vorherigen Ansprüche, wobei die erste Schicht (9) des Isolierelementes (3) eine Rohdichte von 40 kg/m³ bis 120 kg/m³, vorzugsweise von 60 kg/m³ bis 90 kg/m³, insbesondere von 80 kg/m³ aufweist.

8. Isoliersystem gemäß irgendeinem der vorherigen Ansprüche, wobei die zweite Schicht (9) Fasern aufweist, die im Wesentlichen parallel zu den Oberflächen der zweiten Schicht (9) ausgerichtet sind.

9. Isoliersystem gemäß irgendeinem der vorherigen Ansprüche, wobei der zweite Teil des Schaftes (11) für jeden Bereich (30), der in das Isolierelement (3) hineinragt, eine Länge von ungefähr 5 bis 40 mm, vorzugsweise 25 bis 30 mm aufweist.

10. Verfahren zur Installierung eines Isoliersystems (1) zur Abdeckung einer Fassade (2) eines Gebäudes gemäß einem der Ansprüche 1 bis 9, mit den folgenden Schritten:
- Befestigung zumindest eines Isolierelementes (3), das zumindest eine erste Schicht (8) und eine zweite Schicht (9) aufweist, die vorzugsweise miteinander verbunden sind, wobei die erste Schicht (8), die zu der Fassade (2) hin gewandt ist, eine Rohdichte aufweist, die niedriger ist als die Rohdichte der zweiten Schicht (9) und wobei zumindest die erste Schicht (8) aus Mineralfasern, insbesondere Steinwollfasern, und einem Bindemittel besteht,
- Verwendung zumindest eines mechanischen Befestigungsmittels (4) zum Befestigen des Isolierelementes (3) an der Fassade (2) des Gebäudes, wobei das Befestigungsmittel (4) einen Schaft (11), der sich aufrecht durch das Isolierelement (3) in das Gebäudesubstrat erstreckt, und einen Stopfen und/oder eine Stopfen-Platte (12) aufweist, die auf oder bündig mit der Außenfläche des Isolierelementes (3) angeordnet ist,
- Befestigung des Befestigungsmittels (4) in dem Gebäude durch Vergrößern des äußeren Durchmessers des Schaftes (11), der in das Gebäudesubstrat hineinragt,
- Anordnen eines Teils des Schaftes (11) des Befestigungsmittels (4) derart, dass er sich in die erste Schicht (8) des Isolierelementes (3) in einer parallelen Richtung zu einer Oberfläche der Fassade (2) erstreckt, wobei das Befestigungsmittel (4) mit einem ersten Teil des Schaftes (11), der sich in das Gebäudesubstrat erstreckt, durch eine in dem Schaft (11) vorgesehene Schraube (20) festgezogen ist, mit welcher ein zweiter Teil der Außenfläche des Befestigungsmittels (4) von einer parallelen Ausrichtung zu der Außenfläche des Befestigungsmittels (4) zu einer überwiegend senkrechten Ausrichtung zu der Außenfläche hin gerichtet wird und dadurch in die erste Schicht (8) des Isolierelementes (3) hineinragt.

11. Verfahren gemäß Anspruch 10, wobei zumindest zwei Bereiche (30) des zweiten Teils des Schaftes (11) in zumindest zwei unterschiedliche Richtungen, vorzugsweise senkrecht zueinander, in das Isolierelement (3) hineinragen.

## Revendications

1. Système d'isolation destiné à recouvrir une façade (2) d'un bâtiment et composé d'au moins un élément d'isolation (3) et d'au moins un élément de fixation mécanique (4), lequel élément de fixation (4) fixe lors de l'utilisation l'élément d'isolation (3) à la façade (2) du bâtiment, dans lequel
- ledit élément d'isolation (3) comprend au moins une première couche (8) et une deuxième couche (9), qui sont de préférence reliées l'une à l'autre ;
- ladite première couche (8) est dirigée lors de l'utilisation vers la façade (2) et comprend une densité brute, qui est inférieure à la densité brute de la deuxième couche (9) ;
- au moins une couche (8, 9) est fabriquée en fibres minérales, notamment en fibres de laine de roche, et en un agent liant, ou en plastique cellulaire, notamment en polystyrène expansé (EPS),
- ledit élément de fixation (4) comprend une tige (11), qui s'étend à travers l'élément d'isolation (3) dans le bâtiment, et un bouchon ou une plaque de bouchon (12), qui est disposé sur ou affleure avec la surface extérieure de l'élément d'isolation (3),
**caractérisé en ce que**
ladite tige (11) de l'élément de fixation (4) s'étend partiellement dans la première couche (8) de l'élément d'isolation (3) dans une direction parallèle à une surface de la façade (2), la première couche (8) étant fabriquée en fibres minérales et en un agent liant, la première couche (8) étant lors de l'utilisation en contact avec la façade (2) et une vis (20) étant prévue dans la tige (11) de l'élément de fixation (4), à l'aide de laquelle une première partie de la tige (11), qui s'étend dans le bâtiment, est soutenue et à l'aide de laquelle une deuxième partie de la surface extérieure de l'élément de fixation (4) est orientée de l'orientation parallèle à la surface extérieure de l'élément de fixation (4) à l'orientation principalement perpendiculaire à la surface extérieure et fait donc saillie dans la première couche (8) de l'élément d'isolation (3).

2. Système d'isolation selon la revendication 1,
**caractérisé en ce que** la deuxième partie de la tige (11) comprend au moins deux zones (30), qui font saillie dans l'élément d'isolation (3), les zones (30) faisant saillie dans au moins deux directions différentes, de préférence de manière perpendiculaire l'une à l'autre, dans l'élément d'isolation.

3. Système d'isolation selon l'une quelconque des revendications précédentes,
**caractérisé en ce qu'**une troisième couche (10) est disposée sur la deuxième couche (9) et laquelle troisième couche (10) comprend une densité brute comprise entre 180 kg/m³ et 350 kg/m³, de préférence entre 220 kg/m³ et 260 kg/m³, notamment de 240 kg/m³.

4. Système d'isolation selon l'une quelconque des revendications précédentes,
**caractérisé en ce que** l'élément (3) en tant que tel est défini par une contrainte de compression de 10% de tension pour assurer qu'un certain effet de ressort de rappel peut être utilisé pendant l'installation.

5. Système d'isolation selon l'une quelconque des revendications précédentes,
**caractérisé en ce que** la première couche (8) comprend une résistance en compression de 5 kPa à 15 kPa, de préférence de 5 kPa à 10 kPa et/ou **en ce qu'**une précontrainte de l'élément de fixation (4) est dans une gamme comprise entre 100 N et 600 N par élément de fixation.

6. Système d'isolation selon l'une quelconque des revendications précédentes, dans lequel la première couche (8) de l'élément d'isolation (3) comprend une densité brute comprise entre 30 kg/m³ et 70 kg/m³, de préférence entre 40 kg/m³ et 60 kg/m³, notamment de 50 kg/m³.

7. Système d'isolation selon l'une quelconque des revendications précédentes, dans lequel la deuxième couche (9) de l'élément d'isolation (3) comprend une densité brute comprise entre 40 kg/m³ et 120 kg/m³, de préférence entre 60 kg/m³ et 90 kg/m³, notamment de 80 kg/m³.

8. Système d'isolation selon l'une quelconque des revendications précédentes, dans lequel la deuxième couche (9) comprend des fibres, qui sont essentiellement orientées parallèlement aux surfaces de la deuxième couche (9).

9. Système d'isolation selon l'une quelconque des revendications précédentes, dans lequel la deuxième partie de la tige (11) de chaque zone (30), qui fait saillie dans l'élément d'isolation (3), a une longueur d'environ 5 à 40 mm, de préférence 25 à 30 mm.

10. Procédé d'installation d'un système d'isolation (1) destiné à recouvrir une façade (2) d'un bâtiment selon l'une des revendications 1 à 9, comprenant les étapes suivantes de :
- fixer au moins un élément d'isolation (3) comprenant au moins une première couche (8) et une deuxième couche (9), qui sont de préférence reliées l'une à l'autre, la première couche (8), qui est dirigée vers la façade (2), ayant une densité brute, qui est inférieure à la densité brute de la deuxième couche (9) et au moins la première couche (8) étant fabriquée en fibres minérales, notamment en fibres de laine de roche, et en un agent liant,
- utiliser au moins un élément de fixation (4) pour fixer l'élément d'isolation (3) à la façade (2) du bâtiment, dans lequel l'élément de fixation (4) comprend une tige (11), qui s'étend à travers l'élément d'isolation (3) dans le bâtiment, et un bouchon et/ou une plaque de bouchon (12), qui est disposé sur ou affleure avec la surface extérieure de l'élément d'isolation (3),
- fixer l'élément de fixation (4) dans le bâtiment en augmentant le diamètre extérieur de la tige (11), qui fait saillie dans le substrat de bâtiment,
faire saillir une partie de la tige (11) de l'élément de fixation (4) dans la première couche (8) de l'élément d'isolation (3) dans une direction parallèle à une surface de la façade (2), ce qui provoque que l'élément de fixation (4) avec une première partie de la tige s'étendant dans le substrat de bâtiment est soutenu par une vis (20) prévue dans la tige (11), à l'aide de laquelle vis une deuxième partie de la surface extérieure de l'élément de fixation (4) est déplacée d'une orientation parallèle à la surface extérieure de l'élément de fixation (4) à une orientation principalement perpendiculaire à la surface extérieure et fait donc saillie dans la première couche (8) de l'élément d'isolation (3).

11. Procédé selon la revendication 10, dans lequel au moins deux zones (30) de la deuxième partie de la tige (11) font saillie dans l'élément d'isolation (3) dans au moins deux directions différentes, de préférence de manière perpendiculaire l'une à l'autre.
